# EUROPÄISCHE PATENTSCHRIFT

(11) **EP 3 052 606 B1**
(45) Veröffentlichungstag und Bekanntmachung des Hinweises auf die Patenterteilung: **22.03.2017**
(21) Anmeldenummer: 14783582.1
(22) Anmeldetag: 02.10.2014
(51) Int. Cl.: C12C 7/06, C12C 7/165, C12C 13/10

(54) **VERFAHREN UND VORRICHTUNG ZUR HERSTELLUNG VON BIER**
METHOD AND APPARTUS FOR THE PRODUCTION OF BEER
PROCÉDÉ ET DISPOSITIF POUR LA PRODUCTION DE BIÈRE

(30) Priorität: 04.10.2013 AT 506422013
(43) Veröffentlichungstag der Anmeldung: 10.08.2016
(73) Patentinhaber: Moser, Gilbert, 8562 Mooskirchen (AT)
(72) Erfinder: Moser, Gilbert, 8562 Mooskirchen (AT)
(74) Vertreter: Babeluk, Michael
(86) Internationale Anmeldenummer: PCT/EP2014/071199
(87) Internationale Veröffentlichungsnummer: WO 2015/049353

(56) Entgegenhaltungen:
- DE-A1- 1 964 416
- DE-A1-102008 039 374
- DE-B1- 2 329 360
- BREWING B D E: "Brewing: Science and practice", BREWING SCIENCE AND PRACTICE, WOODHEAD PUBLISHING, CAMBRIDGE, GB, 1. Januar 2004 (2004-01-01), Seiten 513-527,655, XP003018692,

## Beschreibung

Die Erfindung betrifft ein Verfahren zur Herstellung von Bier gemäß dem Oberbegriff von Patentanspruch 1.

Bei einem solchen Verfahren wird das Maischen in einem ersten Behälter unter Zufuhr von Wärme und unter Rühren durchgeführt, und die so hergestellte Maische wird danach im gleichen Behälter geläutert, und danach wird das Würzekochen, das Kühlen der Würze, die Heiß- und Kühltrubabscheidung und schließlich die Gärung durchgeführt.

Die Herstellung von Bier in Kleinbrauereien und Kleinstbrauereien gewinnt zunehmend an Bedeutung, da es auf diese Weise möglich ist, die handwerklichen Aspekte der Herstellung besonders zu berücksichtigen. Um die Kosten bei der Herstellung zu begrenzen, muss der apparative Aufwand möglichst gering gehalten werden, wogegen die Effizienz im Sinne hoher Durchsatzleistungen eine etwas geringere Bedeutung besitzt.

Eine Minimierung der erforderlichen Reparatur wird bei einer Lösung erreicht, wie sie in der DE 10 2005 012 076 A vorgeschlagen ist. Dabei wird das Maischen in einem Sieb durchgeführt, das in einem Behälter eingesetzt ist. Die Läuterung wird durchgeführt, indem das Sieb aus dem Behälter herausgezogen wird. Es ist offensichtlich, dass Verfahren und Vorrichtung sehr einfach sind, aber auch nicht dazu geeignet sind, auch nur durchschnittlich anspruchsvolle Brauverfahren durchuführen, da beispielsweise das Anschwänzen überhaupt nicht vorgesehen ist.

Die DE 10 2005 002 741 A offenbart ein Kleinsudwerk mit turmförmig übereinander angeordneten Behältern, die in einer einzigen Hülle verbaut sind. Dies ermöglicht eine gewisse konstruktive Vereinfachung, allerdings werden die einzelnen Verfahrensschritte in herkömmlicher Weise in unterschiedlichen Behältern ausgeführt.

Aus der WO 2009/017428 A ist ein zylindrokonisches Gefäß bekannt, das jedoch für den Gärprozess vorgesehen ist. Der Vorgang des Maischens und des Läuterns ist nicht explizit erklärt.

Die US 755,144 A betrifft ein Verfahren und einen Kessel zum Auslaugen von Getreide. Die DE 2 329 360 B offenbart ein Verfahren und einen Behälter zum Trennen von Maische und Trebern. Es ist nicht möglich diese Behälter so zur Herstellung von Bier zu verwenden, dass ein minimaler apparativer Zusatzaufwand notwendig ist.

Aus der DE 10 2008 039 374 A ist ein Läuterverfahren für Würze bekannt, bei dem durch Umwälzung der Maische über Pumpen eine Läuterung bewirkt wird. Bei diesem beschriebenen Verfahren wird die Maische im Kreislauf gepumpt und auf die Filterkerzen angeschwemmt, wodurch sich ein Filterkuchen aufbaut.

Da es sich um senkrecht stehende Elemente handelt, ist die Ausbildung der Filterschicht strömungstechnisch schwer beherrschbar und die ausgebildete Filterschicht ungleichmäßig.

Aus der DE 1 964 416 A ist ein zylindrokonischer Behälter bekannt, der als Läuterbottich vorgesehen ist. Ein direkt an Boden angeordneter Propeller dient zur Umwälzung. Damit ist es nicht möglich, die Trebern als Filterhilfsmittel zu verwenen, wodurch nur eine geringe Blankheit erreicht wird.

Aufgabe der vorliegenden Erfindung ist es, ein Verfahren zur Herstellung von Bier anzugeben, das einerseits geringstmöglichen Anforderungen an die benötigte Appaatur aufweist, andererseits jedoch die Möglichkeit bietet, sämtliche Verfahrensschritte auszuführen, die zur Herstellung von höchstwertigem Bier erforderlich oder angezeigt sind.

Erfindungsgemäß wird diese Aufgabe durch die Merkmale von Patentanspruch 1 gelöst. Bei dem erfindungsgemäßen Verfahren kann somit der Behälter, in dem das Maischen durchgeführt wird, auch für den Vorgang des Läuterns verwendet werden.

Für den Vorgang des Maischens ist es stets erforderlich, den Behälterinhalt durch Rühren zu mischen. Beim erfindungsgemäßen Verfahren erfolgt das Mischen dabei so, dass ein Rührwerk in der Maische bewegt wird, wobei ein Überstand oberhalb des Rührwerks nahezu frei von Rührbewegung ist. Dies ermöglicht es insbesondere, dass während des Maischens Flüssigkeit aus dem Überstand von unten zurück in den Behälter geführt wird, in dem die Dickmaische vorliegt. Neben einer verbesserten Umwälzung des Behälterinhalts wird dadurch auch eine genauere Einstellung der Temperatur der Würze möglich, da die abgezogene Flüssigkeit in Wärmetauschern während des Maischens entsprechend temperiert werden kann. Die grundsätzliche Einstellung der Temperatur der Maische erfolgt über eine Heizzone, die im zylindrischen Teil der Behälterwand vorgesehen ist. Ein zusätzlicher Vorteil dieser Art der Rückspülung besteht darin, dass auch der untere Teil des Behälters, der von der eigentlichen Bewegung des Rührwerks nicht erfasst wird, entsprechend umgewälzt wird.

Das Läutern erfolgt, indem die Würze nach unten durch den Filterboden abgezogen und in einem Zwischenbehälter gelagert wird. Wie bei herkömmlichen Verfahren dient dabei der am Sieb des Filterbodens abgelagerte Treberkuchen als eigentlicher Filter, der die Schwebstoffe aus der Würze zurückhält. Nach dem Läutern erfolgt in typischen Verfahren das Anschwänzen, wobei durch Spülung mit heißem Wasser ein weiteres Auslaugen der Trebern erfolgt. Gemäß einer bevorzugten Variante des erfindungsgemäßen Verfahrens wird dies so durchgeführt, dass das Wasser zumindest teilweise von unten durch den Filterkuchen eingepumpt wird. Auf diese Weise erfolgt eine Auflockerung des Treberkuchens mit Wasser, die bewirkt, dass die Inhaltsstoffe mit einer geringeren Wassermenge ausgelaugt werden können. Ein besonderer Vorteil besteht dabei darin, dass danach das Austrebern ohne mechanische Hilfe beispielsweise durch eine Aufhackmaschine erfolgen kann.

Die oben dargestellten Effekte können insbesondere dadurch gesteigert werden, dass gemeinsam mit dem Wasser Inertgas durch den Filterkuchen eingeführt wird. Dadurch kann eine zusätzliche Auflockerung des Treberkuchens erreicht werden.

Eine weitere apparative Vereinfachung kann dadurch erreicht werden, dass die Würze nach dem Läutern wieder in den ersten Behälter zurückgeführt und dort unter Zugabe von Hopfen gekocht wird. Der erste Behälter übernimmt dabei die Funktion der Sudpfanne. Durch das Kochen erfolgt nicht nur das Verdampfen von Wasser, es werden auch wertvolle Bestandteile des Hopfens isomerisiert und gelöst. Dies ist wichtig für die Farb- und Aromabildung, das Ausdampfen unerwünschter Aromastoffe, das Ausscheiden von Eiweiß, das Sterilisieren der Würze und das Zerstören der Enzyme.

Insbesondere ist es günstig, wenn nach dem Kochen die Heißtrubabscheidung und die Kühltrubabscheidung im ersten Behälter kombiniert durchgeführt wird. Dies wird in der Weise durchgeführt, dass nach dem Kochen sofort mit dem Kühlen begonnen wird. Dabei wird die heiße Würze knapp unter dem Würzespiegel abgesaugt und in einem externen Kühler abgekühlt und von unten in den Behälter zurückgeführt. Nach dem Abkühlen der Würze kann das Umpumpen in den Gärbottich erfolgen, wobei Heißtrub und Kühltrub im Filterboden zurückgehalten werden.

Alternativ ist jedoch auch möglich, dass die Gärung im ersten Behälter durchgeführt wird. In diesem Fall werden Heißtrub und Kühltrub abgeschlämmt und nachfolgend wird die Hefe der Würze zugegeben.

Jedenfalls ist es bei der Anwendung des erfindungsgemäßen Verfahrens möglich, ohne das ansonsten notwendige Whirlpool auszukommen, in dem typischerweise die Heißtrubabscheidung erfolgt.

Die vorliegende Erfindung betrifft auch eine Vorrichtung zur Herstellung von Bier, mit einem ersten Behälter, in dem das Maischen und die Läuterung durchgeführt wird.

Erfindungsgemäß ist diese Vorrichtung dadurch gekennzeichnet, dass der Behälter einen oberen zylindrischen Abschnitt und einen unteren kegelstumpfförmigen Abschnitt aufweist, der als Filterboden ausgebildet ist. Wesentlich an der vorliegenden Erfindung ist die Tatsache, dass durch den kegelstumpfförmig ausgebildeten Bodenteil eine größere Filterfläche zur Verfügung steht als im Fall eines flachen Bodens. Außerdem kann beispielsweise das Austrebern durch eine Öffnung an der Spitze des Kegelstumpfs in besonders günstiger Weise erfolgen.

Besonders effizient ist die erfindungsgemäße Vorrichtung insbesondere dann ausgebildet, wenn der Filterboden im Wesentlichen den gesamten kegelstumpfförmigen Abschnitt ausmacht.

Vorzugsweise ist am tiefsten Punkt des kegelstumpfförmigen Abschnitts eine verschließbare Öffnung zum Austrebern vorgesehen.

In weiterer Folge wird die vorliegende Erfindung anhand der in den Figuren dargestellten Ausführungsbeispielen näher erläutert. Es zeigen:
- Fig. 1: ein Schema einer erfindungsgemäßen Anlage;
- Fig. 2: ein Detail von Fig. 1;
- Fig. 3: ein weiteres Detail von Fig. 1;
- Fig. 4: eine alternative Ausführungsvariante; und
- Fig. 5: eine weitere alternative Ausführungsvariante der Erfindung im Detail.

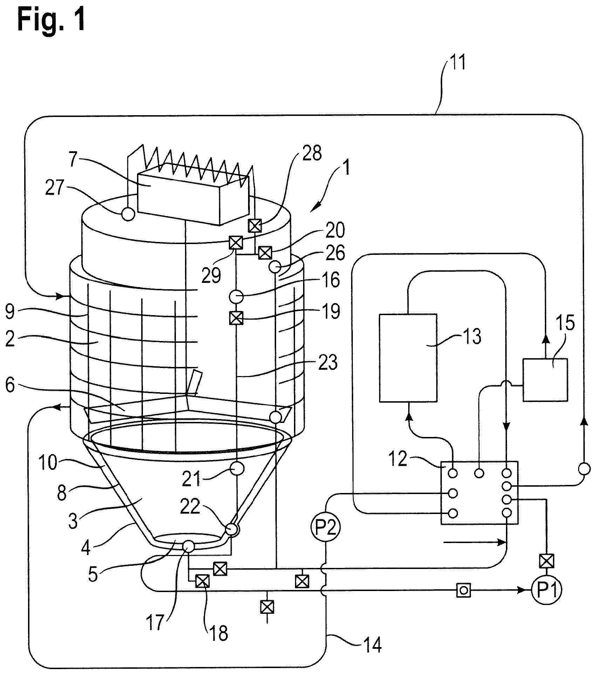

Die erfindungsgemäße Vorrichtung von Fig. 1 besteht wesentlich aus einem zylindrokonischen Behälter 1 mit einem oberen zylindrischen Abschnitt 2 und mit einem unteren kegelstumpfförmigen Abschnitt 3, der den Filterboden bildet und der sich aus einem Mantel 4 und einer unteren Abschluss des Behälters 1 bildenden Austragsöffnung 5 zusammensetzt. Der zylindrische Abschnitt 2 ist an seinem Umfang mit einem Heizmantel 9 umgeben, der zur Beheizung, aber auch zur Kühlung des Inhalts des Behälters 1 vorgesehen ist. Innerhalb des zylindrischen Abschnitts 2 ist ein Rotor 6 drehbar angeordnet, der zur Umwälzung des Behälterinhalts dient. Dieser Rotor 6 wird durch einen Getriebemotor 7 an der Oberseite des Behälters 1 angetrieben.

Im kegelstumpfförmigen Abschnitt 3 ist ein ebenfalls kegelstumpfförmig ausgebildetes Sieb 8 vorgesehen, unterhalb dessen ein Siebraum 10 ausgebildet ist.

In der Folge wird die Funktion der erfindungsgemäßen Vorrichtung näher erläutert.

Zum Maischen wird der mit einer speziellen Mühle gemahlene Schrot im Verhältnis von 1:2,5 bis 1:4 mit Wasser vermischt und in den Behälter 1 eingebracht. Dadurch werden die löslichen und ein Großteil der unlöslichen Inhaltsstoffe des Schrotes enzymatisch abgebaut und in Lösung gebracht. Diese Abbauprozesse werden durch die Wahl von Temperatur und Einwirkzeiten gesteuert.

Die erforderliche Wärme wird hauptsächlich über den Heizmantel 9 zugeführt, der durch eine Versorgungsleitung 11 mit einem Heizmedium, wie etwa Warmwasser, versorgt wird. Die Versorgungsleitung 11 ist mit einem Paneel 12 verbunden, mit dem die verschiedenen Betriebszustände je nach Bedarf angesteuert werden können. Die Wärmezufuhr in den Heizmantel 9 erfolgt dabei in der Weise, dass die Versorgungsleitung 11 mit einem Wärmetauscher 13, der auch als Kocher bezeichnet wird, zusammengeschaltet wird, der über eine Rücklaufleitung 14 mit dem abgekühlten Heizmedium versorgt wird, wodurch der Heizkreislauf geschlossen ist. Die Umwälzung wird über eine drehzahlgeregelte Pumpe P2 angetrieben.

Soll der Behälterinhalt gekühlt werden, dann wird der Kreislauf über einen weiteren Wärmetauscher 15, der als Kühler ausgebildet ist, geführt.

Während des Vorgangs der Maische wird der Inhalt des Behälters 1 schonend durch den Rotor 6 umgewälzt, wobei sich der Großteil dieser Umwälzung jedoch nur auf den mittleren Höhenabschnitts des Inhalts beschränkt. Gleichzeitig oder abwechselnd mit der Rührbewegung wird ein Teil des Behälterinhalts durch eine obere Öffnung 16 abgezogen und über eine Pumpe P1 zu einem Ventil 17 im Bereich der Austragsöffnung 5 gefördert und in den Behälter 1 rückgeführt.

Gleichzeitig wird in besonders bevorzugter Weise über ein Ventil 18 Inertgas, vorzugsweise Kohlendioxid, in den Behälter 1 eingedüst, wodurch die Durchmischung zusätzlich verstärkt wird. Ein weiterer Effekt der Verwendung von Inertgas besteht darin, dass die feinen Maischebestandteile in der Art einer Flotation nach oben getrieben werden und dadurch den Treberkuchen nicht verlegen.

Nach dem Maischen erfolgt das Läutern, bei dem die beim Maischen aus dem Malz gelösten Bestandteile (Würze) von den unlöslichen Bestandteilen (Treber), getrennt werden und der Filterkuchen ausgelaugt wird. Typischerweise wird dieser Vorgang in zwei Phasen unterteilt: das Abläutern der Vorderwürze, bei dem die konzentrierte Würze abgeläutert wird, und das Anschwänzen, bei dem das Auslaugen des Treberkuchens durch Zufuhr von Wasser vorgenommen wird.

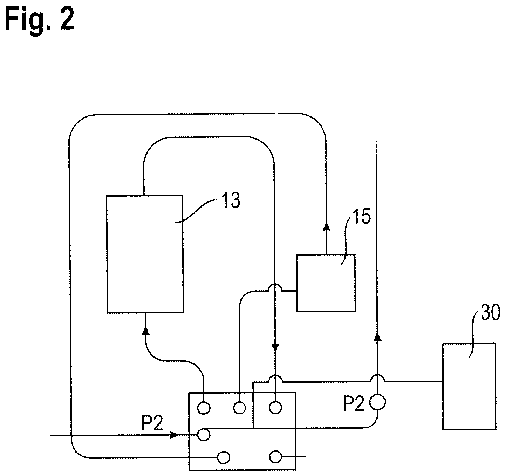

Es ist ein besonderer Aspekt der vorliegenden Erfindung, dass das Läutern in dem selben Behälter wie das Maischen durchgeführt wird. Das Abläutern der Vorderwürze oder Vorschießen wird durchgeführt, indem Ventile 19, 28 in der Abzugsleitung 23 geöffnet werden, so dass aus den Öffnungen 21, 22 Flüssigkeit aus dem Siebraum 10 ausfließen kann. Wichtig ist dabei, dass das Ausströmen der Flüssigkeit aus den Behälter 1 durch Schwerkraft erfolgt nicht durch eine Saugwirkung einer Pumpe. Die offenen Ventile 19, 28 ermöglichen die Ausbildung eines freien Flüssigkeitsspiegels, davon oben Luft strömen kann. Am Beginn des Läuterns wird die trübe Flüssigkeit über Ventil 26 wieder in den Behälter 1 zurück gepumpt, erst dann, wenn die Flüssigkeit klar ist, wird diese aus den Behälter 1 in einen Puffertank 30 übergeführt, der in Fig. 2 ersichtlich ist. Ein Wasserventil 29 ermöglicht selektiv die Zugabe von Wasser, Ventil 28 dient zur Entlüftung und zur Durchführung der CIP-Reinigung über einen Sprühkopf 27.

Das Anschwänzen wird durchgeführt, indem Wasser zugegeben wird, das dann ebenfalls durch den Filterkuchen nach unten geführt und abgezogen wird. Bei herkömmlichen Brauverfahren wird das heiße Wasser oben zugegeben. Bevorzugt ist es jedoch in Zusammenhang mit der vorliegenden Erfindung, dass das Wasser ganz oder zumindest teilweise von unten durch den Treberkuchen gedrückt wird. Dadurch kann eine besonders gute Auslaugung erzielt werden.

Die weiteren üblichen Verfahrensschritte der Herstellung von Bier, nämlich das Würzekochen, das Kühlen der Würze, die Heiß- und Kühltrubabscheidung können im Behälter 1 durchgeführt werden, indem nach der Entnahme der Treber die Würze wieder in den Behälter 1 zurückgeführt wird, oder aber in einem speziellen Gärtank, der hier nicht näher dargestellt ist.

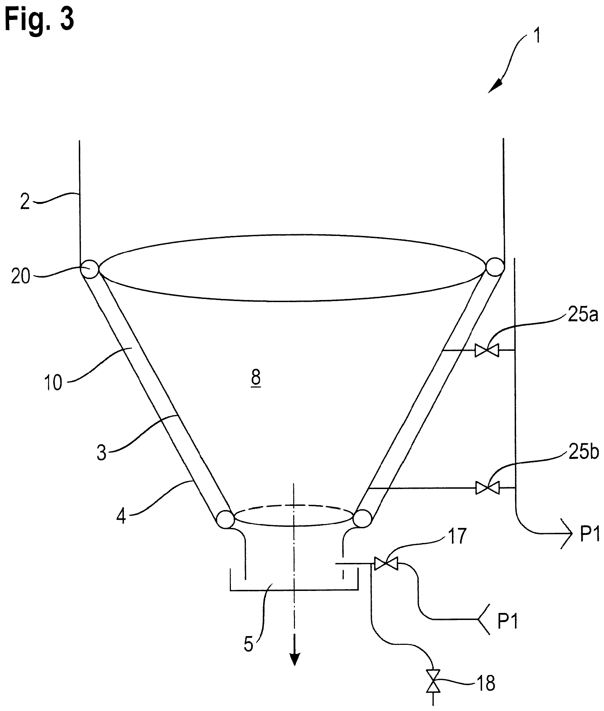

Fig. 3 zeigt den kegelstumpfförmigen Abschnitt im Detail. Der Siebraum 10 ist oben, am Übergang zum zylindrischen Abschnitt 2 mit einer Dichtung 20 abgeschlossen. Ventile 25a, 25b dienen dazu, den Inhalt des Siebraums 10 auszutragen.

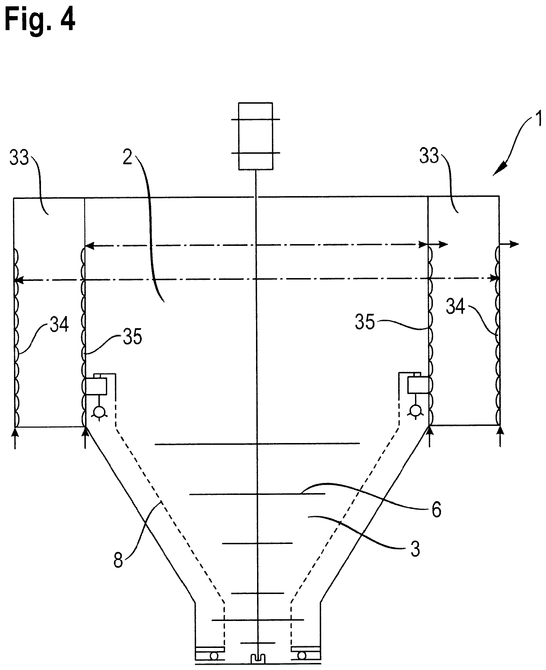

Die Ausführungsvariante von Fig. 4 unterscheidet sich von den oben beschriebenen Ausführungsvarianten dadurch, dass um den zylindrischen Abschnitt 2 des Behälters 1 ein Ringraum 33 angeordnet ist, der dazu dient, die Läuterwürze nach dem Läutern kurzfristig auszulagern, um den Behälter zu reinigen. Dadurch kann der Puffertank 30 entfallen. Die Vorrichtung ist somit kompakt und thermisch optimiert.

Wärmetauscherflächen 34 und 35 dienen dazu, den Inhalt des Behälters 1 und des Ringraums 33 selektiv erwärmen oder kühlen zu können, um das Verfahren zu optimieren.

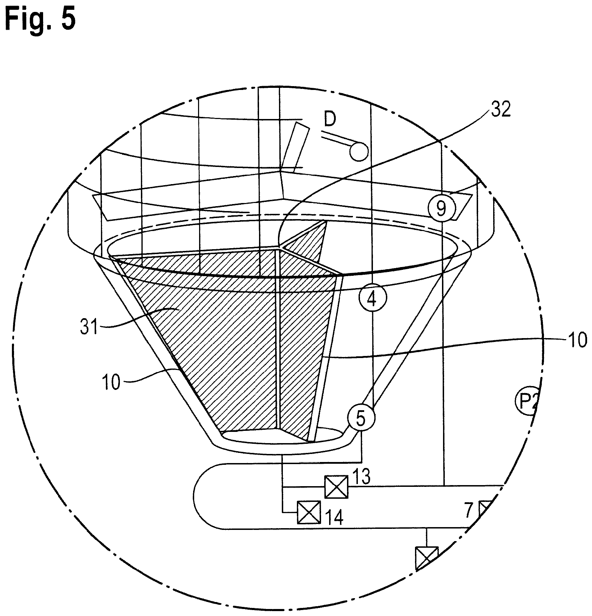

Fig. 5 zeigt eine alternative Ausführungsvariante der Erfindung, bei der senkrechte Filterelemente in der Form dreier radialer Doppelplatten 31 vorgesehen sind, die von einem gemeinsamen axialen Abschnitt 32 ausgehen. Der Siebraum 10 ist dabei im Inneren der Doppelplatten 31 ausgebildet. Dies ermöglicht es, die Filterfläche weiter zu vergrößern.

## Patentansprüche

1. Verfahren zur Herstellung von Bier, bei dem das Maischen in einem ersten Behälter (1) unter Zufuhr von Wärme und unter Rühren durchgeführt wird, und die so hergestellte Maische danach im gleichen Behälter (1) geläutert wird, indem die Würze durch einen Filterboden (3) des ersten Behälters (1) abgezogen wird, und danach das Würzekochen, das Kühlen der Würze, die Heiß- und Kühltrubabscheidung und schließlich die Gärung durchgeführt wird, **dadurch gekennzeichnet, dass** das Rühren erfolgt, indem ein Rührwerk (6) unterhalb eines Überstands in der Maische bewegt wird, wodurch ein Überstand oberhalb des Rührwerks (6) weitgehend frei von Rührbewegung ist, wobei Flüssigkeit aus dem Überstand durch den Filterboden (3) in den ersten Behälter (1) rückgeführt wird.

2. Verfahren nach Anspruch 1, **dadurch gekennzeichnet, dass** nach dem Läutern das Anschwänzen erfolgt, indem Wasser von unten durch den Filterboden (3)) in den ersten Behälter (1) eingepumpt wird.

3. Verfahren nach Anspruch 2, **dadurch gekennzeichnet, dass** gemeinsam mit dem Wasser Inertgas durch den Filterboden (3) eingeführt wird.

4. Verfahren nach einem der Ansprüche 1 bis 3, **dadurch gekennzeichnet, dass** die Würze nach dem Läutern wieder in den ersten Behälter (1) zurückgeführt und dort gekocht wird.

5. Verfahren nach Anspruch 4, **dadurch gekennzeichnet, dass** nach dem Kochen die Heißtrubabscheidung und die Kühltrubabscheidung im ersten Behälter (1) kombiniert durchgeführt wird.

6. Verfahren nach Anspruch 5, **dadurch gekennzeichnet, dass** nach dem Kochen heiße Würze unmittelbar unterhalb des Würzespiegels angesaugt wird und in einem externen Kühler (15) gekühlt wird.

7. Verfahren nach einem der Ansprüche 1 bis 6, **dadurch gekennzeichnet, dass** die Gärung im ersten Behälter (1) durchgeführt wird.

8. Vorrichtung zur Herstellung von Bier, mit einem ersten Behälter, in dem das Maischen und die Läuterung durchgeführt wird, wobei der Behälter (1) einen oberen zylindrischen Abschnitt (2) und einen unteren kegelstumpfförmigen Abschnitt (3) aufweist, der als Filterboden ausgebildet ist und dass am tiefsten Punkt des kegelstumpfförmigen Abschnitts (3) eine verschließbare Öffnung (5) zum Austrebern vorgesehen ist, **dadurch gekennzeichnet, dass** im zylindrischen Abschnitt (2) ein Rotor (6) drehbar angeordnet ist, um den mittleren Höhenabschnitt des Inhalts umzuwälzen, wobei Flüssigkeit aus dem Überstand von unten zurück in den Behälter führbar ist.

9. Vorrichtung nach Anspruch 8, **dadurch gekennzeichnet, dass** das Sieb im Wesentlichen den gesamten Mantel des kegelstumpfförmigen Abschnitts (3) abdeckt.

10. Vorrichtung nach Anspruch 8, **dadurch gekennzeichnet, dass** das Sieb aus im Wesentlichen senkrecht angeordneten Doppelplatten besteht.

11. Vorrichtung nach einem der Ansprüche 8 bis 10, **dadurch gekennzeichnet, dass** an der Wand des zylindrischen Abschnitts (2) eine Heizzone (9) vorgesehen ist.

12. Vorrichtung nach einem der Ansprüche 8 bis 11, **dadurch gekennzeichnet, dass** ein externer Kühler vorgesehen ist.

13. Vorrichtung nach einem der Ansprüche 8 bis 12, **dadurch gekennzeichnet, dass** ein externer Kocher (13) vorgesehen ist.

14. Vorrichtung nach einem der Ansprüche 8 bis 13, **dadurch gekennzeichnet, dass** um den Behälter (1) ein Ringraum (33) angeordnet ist.

## Claims

1. A method for the production of beer, in which the mashing is conducted in a first vessel (1) with supply of heat and under stirring, and the mash thus produced is then lautered in the same vessel (1), in that the wort is drawn through a filter base (3) of the first vessel (1), and the wort boiling, the cooling of the wort, the hot and cold trub separation and finally the fermentation are conducted thereafter, **characterised in that** agitation is carried out **in that** an agitator (6) is moved in the mash beneath a supernatant liquid, as a result of which a supernatant liquid above the agitator (6) is substantially free from stirring movement, wherein liquid from the supernatant liquid is returned through the filter base (3) to the first vessel (1).

2. A method according to claim 1, **characterised in that** sparging occurs after lautering, **in that** water is pumped from below through the filter base (3) into the first vessel (1).

3. A method according to claim 2, **characterised in that** inert gas is introduced through the filter base (3) together with the water.

4. A method according to one of the claims 1 to 3, **characterised in that** the wort is returned to the first vessel (1) again after lautering and is boiled there.

5. A method according to claim 4, **characterised in that** hot trub separation and cold trub separation are carried out after boiling in a combined manner in the first vessel (1).

6. A method according to claim 5, **characterised in that** hot wort is extracted by suction directly beneath the wort level after boiling and is cooled in an external cooler (15).

7. A method according to one of the claims 1 to 6, **characterised in that** fermentation is carried out in the first vessel (1).

8. An apparatus for the production of beer, comprising a first vessel in which the mashing and the lautering are carried out, wherein the vessel (1) comprises an upper cylindrical section (2) and a bottom cylindrical section (3) which is formed in the manner of a truncated cone and is formed as a filter base, and a closable opening (5) for grape marc removal is provided at the lowermost point of the truncated-cone-shaped section (3), **characterised in that** a rotor (6) is rotatably arranged in the cylindrical section (2) in order to circulate the middle height section of the content, wherein liquid can be guided from the supernatant liquid from below back into the container.

9. An apparatus according to claim 8, **characterised in that** the screen substantially covers the entire jacket of the truncated-cone-shaped section (3).

10. An apparatus according to claim 8, **characterised in that** the screen consists of substantially perpendicularly arranged double plates.

11. An apparatus according to one of the claims 8 to 10, **characterised in that** a heating zone (9) is provided on the wall of the cylindrical section (2).

12. An apparatus according to one of the claims 8 to 11, **characterised in that** an external cooler is provided.

13. An apparatus according to one of the claims 8 to 12, **characterised in that** an external boiler (13) is provided.

14. An apparatus according to one of the claims 8 to 13, **characterised in that** an annular space (33) is arranged around the vessel (1).

## Revendications

1. Procédé de fabrication de bière selon lequel le maltage est effectué dans une première cuve (1) avec apport de chaleur et sous agitation, et la maische ainsi obtenu est ensuite affinée dans la même cuve (1) en soutirant le moût par le fond filtrant (3) de la première cuve (1), puis, on effectue l'ébullition du moût, son refroidissement, la séparation du résidu de chauffage et du résidu de refroidissement et enfin la fermentation,
**caractérisé en ce que**
l'agitation est effectuée en déplaçant un mélangeur (6) au-dessous d'un surnageant dans la maische de sorte que le surnageant situé au-dessus du mélangeur (6) soit largement exempte de mouvement d'agitation, du liquide provenant du surnageant étant recyclé dans la première cuve (1) au travers du fond filtrant (3).

2. Procédé conforme à la revendication 1,
**caractérisé en ce qu'**
après l'affinage, on effectue la percolation en introduisant par le bas et par pompage de l'eau dans la première cuve (1) au travers du fond filtrant (3).

3. Procédé conforme à la revendication 2,
**caractérisé en ce qu'**
un gaz inerte est introduit au travers du fond filtrant (3) avec l'eau.

4. Procédé conforme à l'une des revendications 1 à 3,
**caractérisé en ce qu'**
après l'affinage, le moût est à nouveau recyclé dans la première cuve (1) et y est soumis à une ébullition.

5. Procédé conforme à la revendication 3,
**caractérisé en ce qu'**
après l'ébullition, la séparation du résidu de chauffage et du résidu de refroidissement est effectuée de manière combinée dans la première cuve (1).

6. Procédé conforme à la revendication 5,
**caractérisé en ce qu'**
après l'ébullition, le moût chaud est directement aspiré au-dessous de son niveau et est refroidi dans un refroidisseur externe (15).

7. Procédé conforme à l'une des revendications 1 à 6,
**caractérisé en ce que**
la fermentation est effectuée dans la première cuve (1).

8. Dispositif de fabrication de bière comprenant une première cuve dans laquelle sont effectués le maltage et l'affinage, cette cuve (1) comprenant un segment cylindrique supérieur (2) et un segment inférieur en forme de tronc de cône (3) qui est réalisé sous la forme d'un fond filtrant, et, au point le plus bas du segment (3) en forme de tronc de cône, est prévue une ouverture (5) pouvant être obturée pour permettre l'extraction de la drêche,
**caractérisé en ce que**
dans le segment cylindrique (2), un rotor (6) est monté mobile en rotation pour permettre de faire circuler le segment de hauteur médiane du contenu, du liquide provenant du surnageant pouvant être recyclé par le bas dans la cuve.

9. Dispositif conforme à la revendication 8,
**caractérisé en ce que**
le tamis recouvre essentiellement la totalité de l'enveloppe du segment (3) en forme de tronc de cône.

10. Dispositif conforme à la revendication 8,
**caractérisé en ce que**
le tamis est constitué par des doubles plaques essentiellement verticales.

11. Dispositif conforme à l'une des revendications 8 à 10,
**caractérisé en ce que**
sur la paroi du segment cylindrique (2), il est prévu une zone de chauffage (9).

12. Dispositif conforme à l'une des revendications 8 à 11,
**caractérisé en ce qu'**
il est prévu un refroidisseur externe.

13. Dispositif conforme à l'une des revendications 8 à 12,
**caractérisé en ce qu'**
il est prévu un élément d'ébullition externe (13).

14. Dispositif conforme à l'une des revendications 8 à 13,
**caractérisé en ce qu'**
un volume annulaire (33) est situé autour du réservoir (1).
